# EUROPEAN PATENT APPLICATION

(11) **EP 3 119 115 A1**
(43) Date of publication of application: **18.01.2017**
(21) Application number: 15199744.2
(22) Date of filing: 14.12.2015
(51) Int. Cl.: H04W 4/22, H04W 8/22

(54) **CELLULAR STATIONS AND METHODS FOR WARNING STATUS REPORTING**

(30) Priority: 14.07.2015 US 201562192138 P; 10.11.2015 US 201514937001
(71) Applicant: Acer Incorporated, Hsichih, New Taipei City 221 (TW)
(72) Inventor: CHUANG, Ming-Dao, New Taipei City 221 (TW)
(74) Representative: 2K Patentanwälte Blasberg Kewitz & Reichel

(57) **Abstract**

A cellular station coupled to a Mobility Management Entity (MME) is provided. The cellular station includes a wireless transceiver and a controller. The wireless transceiver performs wireless transmission and reception to and from a plurality of wireless communication devices. The controller receives a warning message delivery request for an Earthquake and Tsunami Warning System (ETWS) from the MME, starts broadcasting a public warning message to the wireless communication devices via the wireless transceiver and sends a warning message delivery response to the MME in response to the warning message delivery request, and sends a warning status report comprising status information of one or more of the wireless communication devices to the MME.

## Description

### CROSS REFERENCE TO RELATED APPLICATIONS

This Application claims priority of U.S. Provisional Application No. 62/192,138, filed on July 14, 2015, the entirety of which is incorporated by reference herein. This Application claims priority of U.S. Application No. 14/937,001, filed on November 10, 2015, the entirety of which is incorporated by reference herein.

### BACKGROUND OF THE APPLICATION

### Field of the Application

The application generally relates to wireless communications, and more particularly, to cellular stations and method for warning status reporting in wireless communication systems.

### Description of the Related Art

With growing demand for ubiquitous computing and networking, various wireless technologies have been developed, including Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced (LTE-A) technology, and Time- Division LTE (TD-LTE) technology, etc.

Using release 13 of the LTE technology as an example, the concept of an enhanced warning status reporting is proposed, in which message originators, such as service network operators and government authorities, need to know if warning the population is likely to be successful, or if alternative means of warning citizens need to be considered. In particular, service network operators need to know if they fulfill the service requirements and have actually broadcast warning messages to citizens. According to the 3rd Generation Partnership Project (3GPP) Technical Report (TR) 23.712, an evolved Node-B (eNB) may broadcast warning messages for Earthquake and Tsunami Warning System (ETWS) and send one or more Warning Status Report messages to inform the Mobility Management Entity (MME) about the result of the broadcast being successful or not.

However, with the warning status reporting, service network operators can only collect the status of each eNB regarding whether it is able to complete the broadcast of warning messages, while the statuses of the registered User Equipment (UE) and Machine Type Communication (MTC) devices remain unknown.

### BRIEF SUMMARY OF THE APPLICATION

It is an object of the present invention to provide an enhanced wireless technology enabling improved warning status reporting in wireless communication systems, particularly for broadcasting a public warning message, such as for an Earthquake and Tsunami Warning System (ETWS).

This problem is solved by a cellular station as claimed by claim 1, and by a method for warning status reporting as claimed by claim 8. Further advantageous embodiments are the subject-matter of the dependent claims.

In one aspect of the application, a cellular station coupled to a Mobility Management Entity (MME) is provided. The cellular station comprises a wireless transceiver and a controller. The wireless transceiver is configured to perform wireless transmission and reception to and from a plurality of wireless communication devices. The controller is configured to receive a warning message delivery request for an Earthquake and Tsunami Warning System (ETWS) from the MME, start broadcasting a public warning message to the wireless communication devices via the wireless transceiver and send a warning message delivery response to the MME in response to the warning message delivery request, and send a warning status report comprising status information of one or more of the wireless communication devices to the MME.

In another aspect of the application, a method for warning status reporting, which is executed by a cellular station coupled to an MME, is provided. The method comprises the steps of: receiving a warning message delivery request for an ETWS from the MME; starting to broadcast a public warning message to the wireless communication devices via the wireless transceiver and sending a warning message delivery response to the MME in response to the warning message delivery request; and sending a warning status report comprising status information of one or more of the wireless communication devices to the MME.

Other aspects and features of the invention will become apparent to those with ordinary skill in the art upon review of the following descriptions of specific embodiments of the cellular stations and methods for warning status reporting.

### BRIEF DESCRIPTION OF DRAWINGS

The application can be more fully understood by reading the subsequent detailed description and examples with references made to the accompanying drawings, wherein:
Fig. 1 is a block diagram of a wireless communication environment according to an embodiment of the application;
Fig. 2 is a block diagram illustrating a cellular station according to an embodiment of the application;
Fig. 3 is a flow chart illustrating the method for warning status reporting according to an embodiment of the application;
Figs. 4A and 4B show a message sequence chart illustrating the warning status reporting according to an embodiment of application; and
Figs. 5A and 5B show a message sequence chart illustrating the warning status reporting according to an embodiment of application.

### DETAILED DESCRIPTION OF THE APPLICATION

The following description is made for the purpose of illustrating the general principles of the application and should not be taken in a limiting sense. It should be understood that the embodiments may be realized in software, hardware, firmware, or any combination thereof. The 3GPP specifications are used to teach the spirit of the application, and the application is not limited thereto.

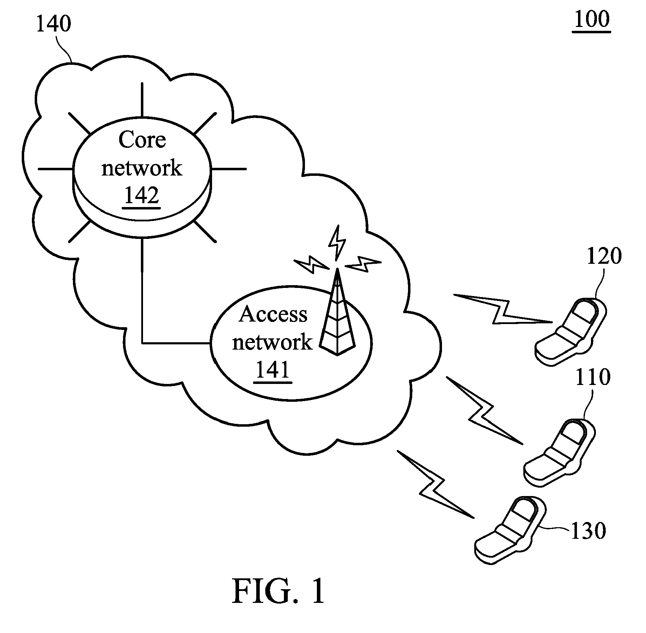

Fig. 1 is a block diagram of a wireless communication environment according to an embodiment of the application. The wireless communication environment 100 comprises three wireless communication devices 110∼130 and a service network 140, wherein all of the wireless communication devices 110∼130 are wirelessly connected to the service network 140 for obtaining mobile services. Each of the wireless communication devices 110∼130 may be a mobile device, such as a feature phone, smartphone, panel Personal Computer (PC), or laptop computer, or may be an MTC device installed in a fixed location, such as a critical public infrastructure (e.g., water treatment facility, bridge, or gas pipeline), or may be any computing device supporting the wireless technology utilized by the service network 140.

The service network 140 is an LTE network, LTE-A network, or TD-LTE network. Specifically, the service network 140 comprises an access network 141 and a core network 142, wherein the access network 141 is responsible for processing radio signals, terminating radio protocols, and connecting the wireless communication devices 110∼130 with the core network 142, while the core network 142 is responsible for performing mobility management, network-side authentication, and interfaces with public/external networks (e.g., the Internet). Each of the access network 141 and the core network 142 may comprise one or more network nodes for carrying out said functions. For example, the access network 141 may be an Evolved-UTRAN (E-UTRAN) which includes at least a cellular station, e.g., an evolved NB (eNB), and the core network 142 may be an Evolved Packet Core (EPC) which includes a Home Subscriber Server (HSS), Mobility Management Entity (MME), Serving Gateway (S-GW), Packet Data Network Gateway (PDN-GW or P-GW), Cell Broadcast Centre (CBC), etc.

Specifically, a CBC is responsible for the management of CBS messages including: allocation of serial numbers; modifying or deleting CBS messages held by the eNB; initiating broadcast by sending fixed length CBS messages to an eNB for each language provided by the cell, and where necessary padding the pages to a length of 82 octets; determining the set of cells to which a CBS message should be broadcast, and indicating within the Serial Number the geographical scope of each CBS message; determining the time at which a CBS message should commence being broadcast; determining the time at which a CBS message should cease being broadcast and subsequently instructing each eNB to cease broadcast of the CBS message; determining the period at which broadcast of the CBS message should be repeated.

Although not shown, the core network 142 may be further connected to a Cell Broadcast Entity (CBE) which is outside the scope of the service network 140 and is responsible for all aspects of formatting Cell Broadcast Service (CBS) messages, including the splitting of a CBS message into a number of pages.

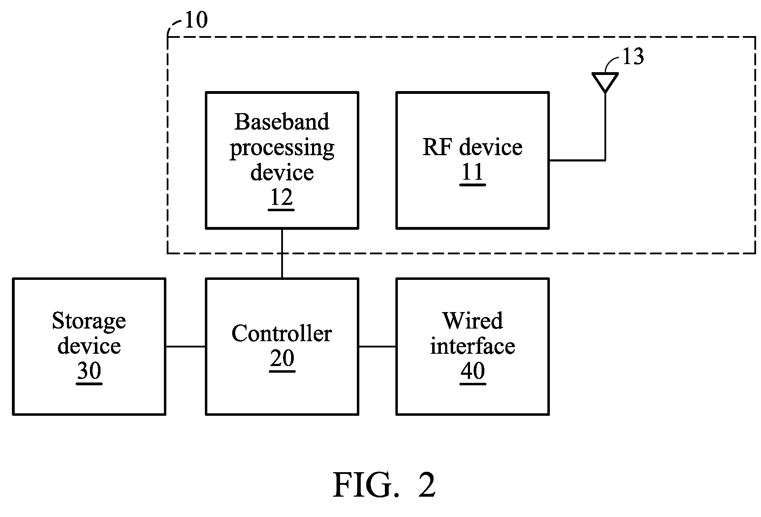

Fig. 2 is a block diagram illustrating a cellular station according to an embodiment of the application. The cellular station comprises a wireless transceiver 10, a controller 20, a storage device 30, and a wired interface 40. The wireless transceiver 10 is configured to perform wireless transmission and reception to and from the wireless communication devices 110∼130. The wireless transceiver 10 comprises a Radio Frequency (RF) device 11, a baseband processing device 12, and an antenna 13. The baseband processing device 12 is configured to perform baseband signal processing. The baseband processing device 12 may contain multiple hardware components to perform the baseband signal processing, including Analog-to-Digital Conversion (ADC)/Digital-to-Analog Conversion (DAC), gain adjusting, modulation/demodulation, encoding/decoding, and so on. The RF device 11 may receive RF wireless signals via the antenna 13, convert the received RF wireless signals to baseband signals, which are processed by the baseband processing device 12, or receive baseband signals from the baseband processing device 12 and convert the received baseband signals to RF wireless signals, which are later transmitted via the antenna 13. The RF device 11 may also contain multiple hardware devices to perform radio frequency conversion. For example, the RF device 10 may comprise a mixer to multiply the baseband signals with a carrier oscillated in the radio frequency of the supported wireless technology, wherein the radio frequency may be 900MHz, 2100MHz, or 2.6GHz utilized in LTE/LTE-A/TD-LTE technology, or another radio frequency depending on the wireless technology in use.

The controller 20 may be a general-purpose processor, a Micro Control Unit (MCU), an application processor, a Digital Signal Processor (DSP), or the like, for controlling the wireless transceiver 10 for wireless communications with the wireless communication devices 110∼130, storing and retrieving data to and from the storage device 30, sending/receiving messages to/from other network entities through the wired interface 40. In particular, the controller 20 coordinates the aforementioned operations of the wireless transceiver 10, the storage device 30, and the wired interface 40 for performing the method for warning status reporting.

In another embodiment, the controller 20 may be incorporated into the baseband processing device 12, serving as a baseband processor.

The storage device 30 may be a memory, such as a FLASH memory or a Non-volatile Random Access Memory (NVRAM), or a magnetic storage device, such as a hard disk or a magnetic tape, or an optical disc, or any combination thereof for storing instructions and/or program code of applications and/or communication protocols.

The wired interface 40 is responsible for providing wired communications with other network entities, such as the MME. The wired interface 40 may include a cable modem, an Asymmetric Digital Subscriber Line (ADSL) modem, a Fiber-Optic Modem (FOM), and/or an Ethernet network interface.

Although not shown, the cellular station may further include other functional devices, such as a display device (e.g., Liquid-Crystal Display (LCD), Light-Emitting Diode (LED) display, or Electronic Paper Display (EPD, etc.), an Input/Output (I/O) device (e.g., button, keyboard, mouse, touch pad, video camera, microphone, speaker, etc.), and a power supply, etc., and the invention is not limited thereto.

It should be understood that the components described in the embodiment of Fig. 2 are for illustrative purposes only and are not intended to limit the scope of the application.

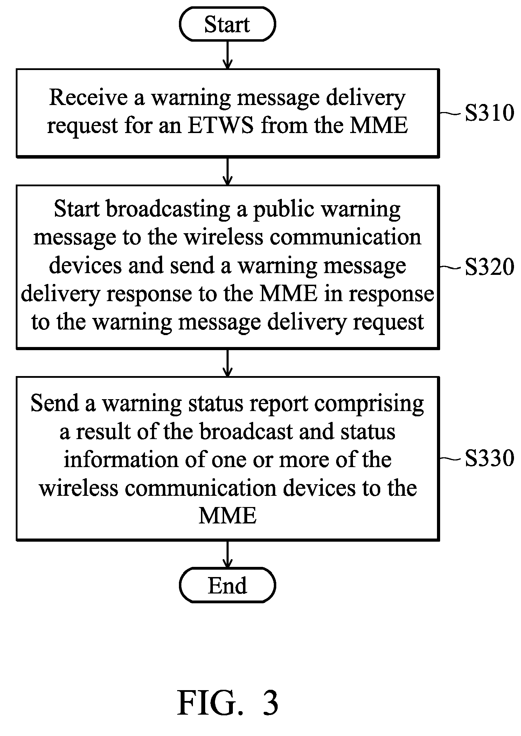

Fig. 3 is a flow chart illustrating the method for warning status reporting according to an embodiment of the application. In this embodiment, the method for warning status reporting is executed by a cellular station, such as an eNB, which is coupled to the MME. To being, the cellular station receives a warning message delivery request for the ETWS from the MME (step S310). In response to the warning message delivery request, the cellular station starts broadcasting a public warning message to the wireless communication devices and sends a warning message delivery response to the MME (step S320). The public warning message may be a type 1/10/11/12 System Information Block (SIB 1/10/11/12), or a paging message including an ETWS indication.

After that, the cellular station sends a warning status report comprising the result of the broadcast and status information of one or more of the wireless communication devices to the MME (step S330), and the method ends.

In another embodiment, the cellular station may keep broadcasting the public warning message, and periodically update the result of the broadcast and the status information of the wireless communication devices. Accordingly, the cellular station may periodically send the warning status report with the updated broadcast result and status information of the wireless communication devices.

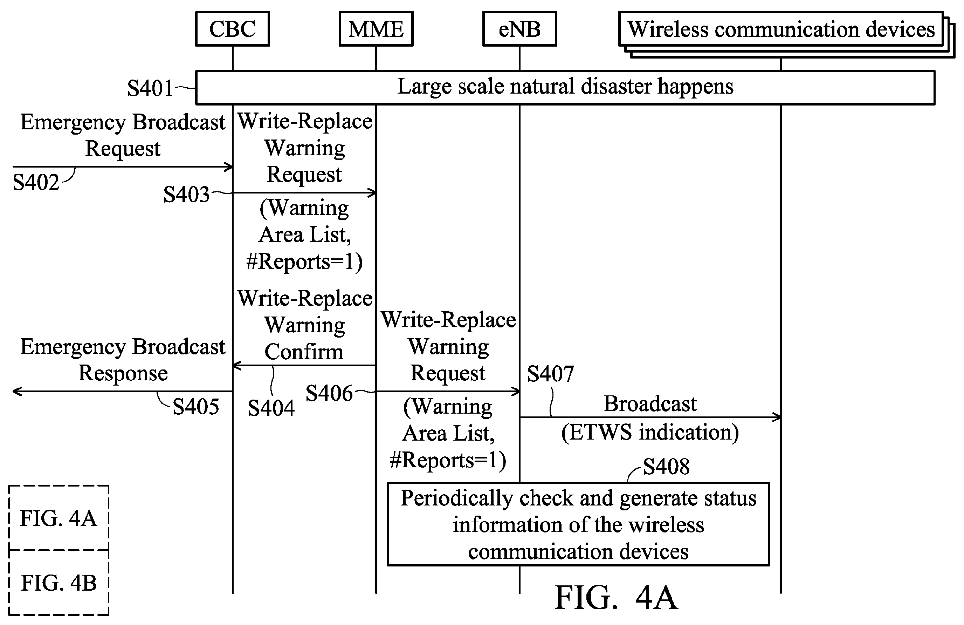

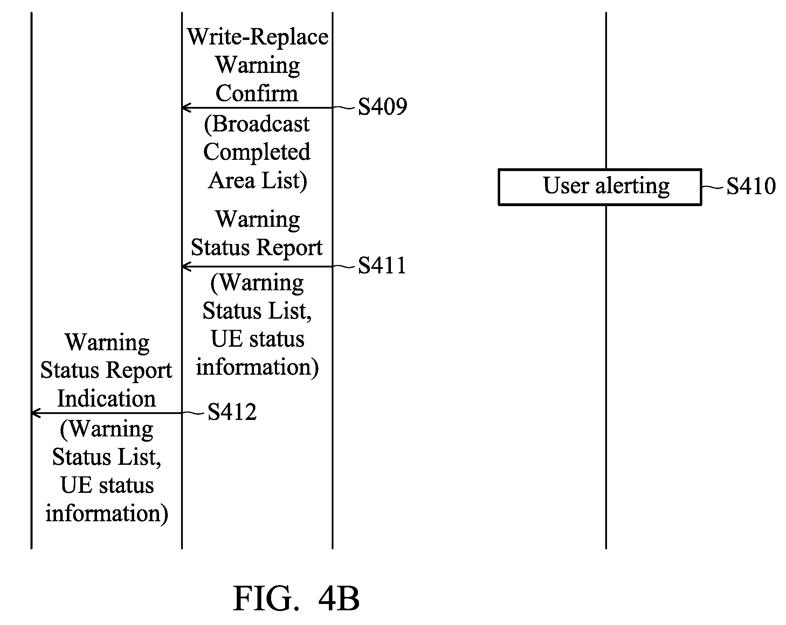

Figs. 4A and 4B show a message sequence chart illustrating the warning status reporting according to an embodiment of application. To begin, a large scale natural disaster, such as an earthquake or tsunami, happens (step S401). After the disaster happens, the CBC receives an Emergency Broadcast Request message from a CBE (step S402). Please note that, the CBE is not depicted in Figs. 4A and 4B as it is beyond the scope of a 3GPP network. In response to the Emergency Broadcast Request message, the CBC sends a Write-Replace Warning Request message including a warning area list and a number of reports requested to the MME (step S403). The warning area list indicates the areas where the warning message needs to be broadcast. Specifically, the warning area list includes a list of Tracking Area Identifiers (TAIs). The number of reports requested indicates a predetermined number of reports that the CBC requests for.

Next, the MME responds to the CBC with a Write-Replace Warning Confirm message without waiting for a response from any eNB (step S404). Upon reception of the Write-Replace Warning Confirm message from the MME, the CBC may confirm to the CBE that it has initiated the warning message delivery procedure (step S405).

Subsequently, the MME forwards the Write-Replace Warning Request message to the eNBs that serve a tracking area as listed in the list of TAIs (step S406). In response to the Write-Replace Warning Request message, the eNB starts broadcasting the public warning message with an ETWS indication (step S407), and periodically checks and generates the status information of the wireless communication devices (step S408).

In one embodiment, the eNB checks with each wireless communication device whether there's an ongoing procedure or transmission with the wireless communication device but no response from the wireless communication device has been received. For example, the ongoing procedure is a Radio Resource Control (RRC) connection reconfiguration procedure and the response is an RRC_CONNECTION_RECONFIGURATION_COMPLETE message, or the response is a Hybrid Automatic Repeat reQuest (HARQ) Acknowledgement (ACK) or non-acknowledgement (NACK) for the ongoing data/message transmission. If the checking result is yes, the wireless communication device is determined to be abnormal (e.g., the wireless communication device may be impaired or disconnected from the service network due to the disaster).

In another embodiment, the eNB checks with each wireless communication device whether there's an ongoing procedure or transmission with the wireless communication device and a response from the wireless communication device has been received, or whether a message initiated for a new procedure has been received from the wireless communication device. For example, the message is an RRC CONNECTION REQUEST message or a Buffer Status Report message. If the checking result is yes, the wireless communication device is determined to be normal (i.e., the wireless communication device is not damaged or disconnected from the service network by the disaster).

The eNB may use a check timer to count a predetermined period of time, and perform said checking for each expiry of the check timer, or the eNB may perform said checking in response to each broadcast of the public warning message. Alternatively, the eNB may perform said checking only once when it is required to send the warning status report.

Subsequent to step S408, the eNB responds to the MME with a Write-Replace Warning Confirm message which includes a Broadcast Completed Area List (step S409). The Broadcast Completed Area List includes a list of cells which are available for broadcast at the time when the eNB received the Write-Replace Warning Request message.

When receiving the public warning message, the wireless communication device activates emergency user alert and message popup to alert the user upon reception of the public warning message (step S410).

In this embodiment, the number of reports requested in the Write-Replace Warning Request message has a value equal to 1. After completing the last broadcast repetition in all the cells, the eNB sends a Warning Status Report message, which includes a list of warning status and status information of the wireless communication devices, to the MME (step S411). The list of warning status includes the cell identifiers of each cell in the eNB and the result of the broadcast for each cell. The status information of the wireless communication devices includes the UE identities (e.g., International Mobile Subscriber Identity (IMSI), International Mobile Equipment Identity (IMEI), or Temporary Mobile Subscriber Identity (TMSI)) of each wireless communication device which is determined to be abnormal in step S408, or the UE identities of each wireless communication device which is determined to be normal in step S408. That is, the eNB may choose to report the abnormal or normal wireless communication devices, as long as the MME goes along with this agreement regarding whether the abnormal or normal wireless communication devices are to be reported.

After that, the MME aggregates the lists of warning status received from all eNBs, and then forwards the aggregated list in one or more Warning Status Report Indication messages to the CBC (step S412).

In another embodiment, if the status information indicates the wireless communication devices from which the eNB received a response in an ongoing procedure or transmission, or from which the eNB received a message initiated for a new procedure, then the MME should be capable of merging the status information received from different eNBs so that wireless communication devices won't be missed out due to cell reselection or handover.

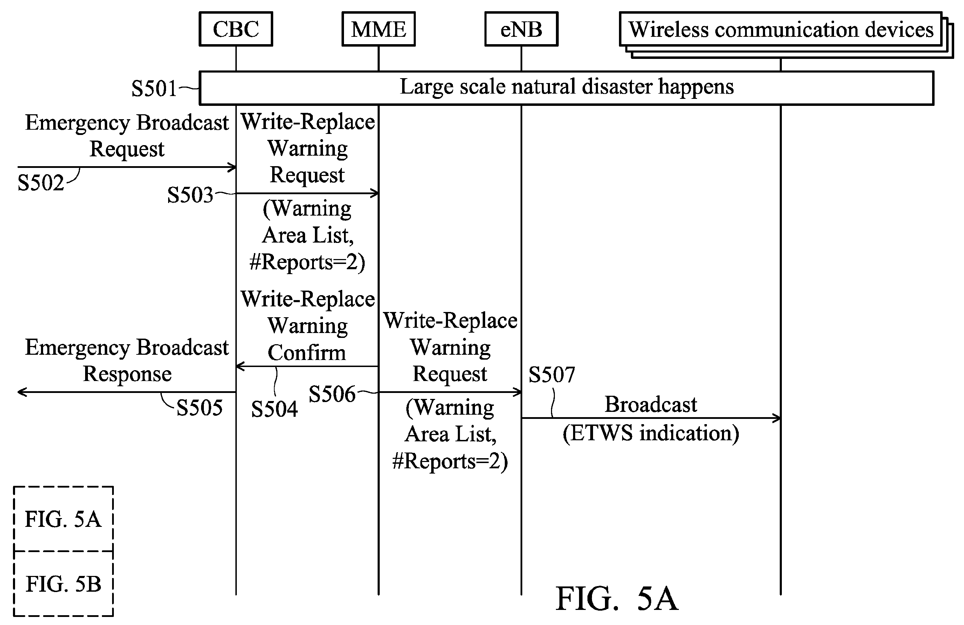

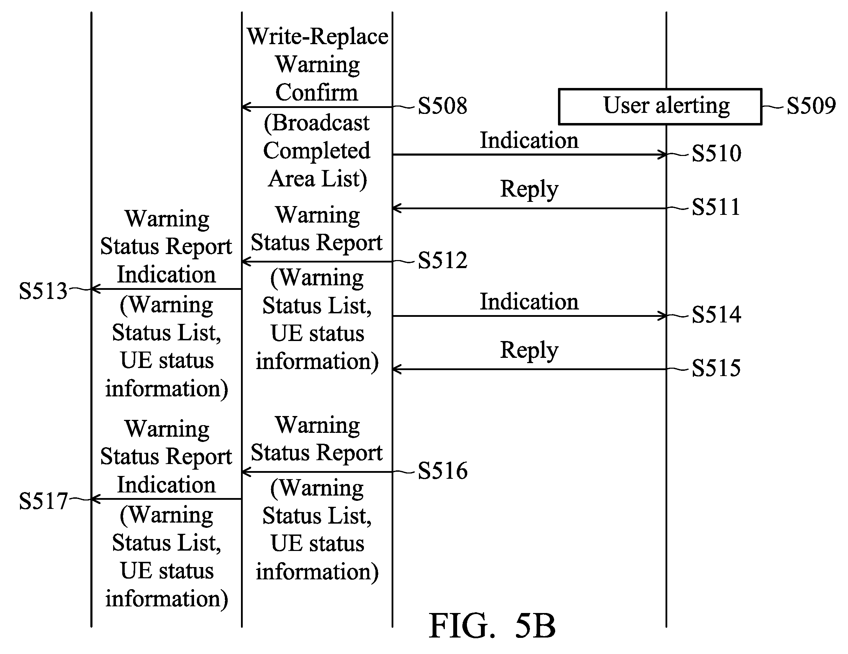

Figs. 5A and 5B show a message sequence chart illustrating the warning status reporting according to an embodiment of application. Similar to the embodiment of Figs. 4A and 4B, a large scale natural disaster, such as an earthquake or tsunami, happens (step S501), and the CBC receives an Emergency Broadcast Request message from a CBE (step S502). In response to the Emergency Broadcast Request message, the CBC sends a Write-Replace Warning Request message including a warning area list and a number of reports requested to the MME (step S503). In this embodiment, the number of reports requested has a value equal to 2.

Next, the MME responds to the CBC with a Write-Replace Warning Confirm message without waiting for a response from any eNB (step S504). Upon reception of the Write-Replace Warning Confirm message from the MME, the CBC may confirm to the CBE that it has initiated the warning message delivery procedure (step S505).

Subsequently, the MME forwards the Write-Replace Warning Request message to the eNBs that serve a tracking area as listed in the list of TAIs (step S506). In response to the Write-Replace Warning Request message, the eNB starts broadcasting the public warning message with an ETWS indication (step S507), and then responds to the MME with a Write-Replace Warning Confirm message which includes a Broadcast Completed Area List (step S508).

When receiving the public warning message, the wireless communication device activates emergency user alert and message popup to alert the user upon reception of the public warning message (step S509).

After completing the first broadcast repetition in all the cells, the eNB starts querying the status of the wireless communication devices. Specifically, the eNB sends an indication to one or more of the wireless communication devices (step S510) and receives a reply to the indication from the one or more of the wireless communication devices (step S511). In one embodiment, the indication may be a paging message including specific UE identity (e.g., IMSI, IMEI, or TMSI) or Group ID, and the wireless communication device which has a UE identity or Group ID matching the one included in the paging message will send a paging response if it is functioning normally.

Please note that steps S510 and S511 may be repeated for querying different wireless communication devices at different times. For example, the eNB may query the wireless communication devices in an order of the time when they registered to the eNB, or in an order of how long they haven't send any message to the eNB. Alternatively, the eNB may query the wireless communication devices according to their SIM parameters, e.g., the last digit of the IMSI, or the eNB may just randomly choose which wireless communication device to query.

Subsequent to step S511, the eNB generates the status information of the wireless communication devices according to the query results, and then sends a Warning Status Report message, which includes a list of warning status and the status information of the wireless communication devices, to the MME (step S512). The status information of the wireless communication devices includes the UE identities (e.g., IMSI, IMEI, or TMSI) of each wireless communication device which is not responded to the indication sent in step S510. That is, the status information indicates the wireless communication devices which may be in an abnormal state, such as being impaired or shut-down.

In response to the Warning Status Report message, the MME aggregates the lists of warning status received from all eNBs, and then forwards the aggregated list in one or more Warning Status Report Indication messages to the CBC (step S513).

After that, the eNB continues the broadcast of the public warning messages. When completing the last broadcast repetition in all the cells, the eNB starts querying the status of the wireless communication devices (steps S514∼515). The detailed description of steps S514∼515 is similar to steps S510∼511 as mentioned above, and is omitted herein for brevity. Subsequently, the eNB generates the status information of the wireless communication devices according to the query results, and then sends a Warning Status Report message, which includes a list of warning status and the status information of the wireless communication devices, to the MME (step S516). In response to the Warning Status Report message, the MME aggregates the lists of warning status received from all eNBs, and then forwards the aggregated list in one or more Warning Status Report Indication messages to the CBC (step S517).

In view of the forgoing embodiments of Figs. 4A, 4B, 5A, and 5B, it will be appreciated that the present application realizes improved warning status reporting by allowing the eNB to report the status information of the wireless communication devices as well as the result of the broadcast. Advantageously, this may provide sufficient information for disaster control without introducing extra signaling procedures (Figs. 4A and 4B in particular).

It should be noted that, other detailed description regarding the warning message delivery procedure in the embodiments of Figs. 4A, 4B, 5A, and 5B, reference may be made to the 3GPP TR 23.712 and TS 23.041.

While the application has been described by way of example and in terms of preferred embodiment, it is to be understood that the application is not limited thereto. Those who are skilled in this technology can still make various alterations and modifications without departing from the scope and spirit of this application. For example, the method for warning status reporting of the present application may be applied to any future evolution of the LTE-based technology. Therefore, the scope of the application shall be defined and protected by the following claims and their equivalents.

## Claims

1. A cellular station, coupled to a Mobility Management Entity (MME), comprising:
a wireless transceiver, configured to perform wireless transmission and reception to and from a plurality of wireless communication devices; and
a controller, configured to receive a warning message delivery request for an Earthquake and Tsunami Warning System (ETWS) from the MME, start broadcasting a public warning message to the wireless communication devices via the wireless transceiver and send a warning message delivery response to the MME in response to the warning message delivery request, and send a warning status report comprising status information of one or more of the wireless communication devices to the MME.

2. The cellular station of claim 1, wherein the status information indicates one or more of the wireless communication devices from which the cellular station did not receive a response in an ongoing procedure or transmission.

3. The cellular station of claim 1, wherein the status information indicates one or more of the wireless communication devices from which the cellular station received a response in an ongoing procedure or transmission, or from which the cellular station received a message initiated for a new procedure.

4. The cellular station of any of the preceding claims, wherein the controller is further configured to generate the status information periodically or in response to each of the broadcasts.

5. The cellular station of any of the preceding claims, wherein the controller is further configured to send the warning status report to the MME repeatedly according to a number of reports requested by the warning message delivery request.

6. The cellular station of claim 5, wherein the controller is further configured to generate the status information for each warning status report.

7. The cellular station of any of the preceding claims and claim 2, wherein the controller is further configured to send an indication to each of the wireless communication devices and receive a reply to the indication from each of the wireless communication devices, and the status information is generated according to the reply.

8. A method for warning status reporting, executed by a cellular station coupled to a Mobility Management Entity (MME), the method comprising:
receiving a warning message delivery request for an Earthquake and Tsunami Warning System (ETWS) from the MME;
starting to broadcast a public warning message to the wireless communication devices via the wireless transceiver and sending a warning message delivery response to the MME in response to the warning message delivery request; and
sending a warning status report comprising status information of one or more of the wireless communication devices to the MME.

9. The method of claim 8, wherein the status information indicates one or more of the wireless communication devices from which the cellular station did not receive a response in an ongoing procedure or transmission.

10. The method of claim 8, wherein the status information indicates one or more of the wireless communication devices from which the cellular station received a response in an ongoing procedure or transmission, or from which the cellular station received a message initiated for a new procedure.

11. The method of any of claims 8 to 10, further comprising:
generating the status information periodically or in response to each of the broadcasts.

12. The method of any of claims 8 to 11, further comprising:
sending the warning status report to the MME repeatedly according to a number of reports requested by the warning message delivery request.

13. The method of claim 12, further comprising:
generating the status information for each repeat of the warning status report.

14. The method of any of claims 8 to 13 and claim 9, further comprising:
sending an indication to each of the wireless communication devices; and
receiving a reply to the indication from each of the wireless communication devices;
wherein the status information is generated according to the reply.
